Europäisches Patentamt

European Patent Office

Office européen des brevets

(11) Veröffentlichungsnummer: **0 211 144 B1**

## EUROPÄISCHE PATENTSCHRIFT

(45) Veröffentlichungstag der Patentschrift: **13.03.91**

(51) Int. Cl.⁵: **G01L 1/22**

(21) Anmeldenummer: **86104965.8**

(22) Anmeldetag: **11.04.86**

(54) **Dehnungsmessstreifen-Aufnehmer.**

(30) Priorität: **08.08.85 DE 3528510**

(43) Veröffentlichungstag der Anmeldung:
**25.02.87 Patentblatt 87/09**

(45) Bekanntmachung des Hinweises auf die
Patenterteilung:
**13.03.91 Patentblatt 91/11**

(84) Benannte Vertragsstaaten:
**DE FR GB**

(56) Entgegenhaltungen:
**EP-A- 0 018 013**
**DE-A- 3 042 506**

(73) Patentinhaber: **HOTTINGER BALDWIN MESS-
TECHNIK GMBH
Im Tiefen See 45 Postfach 42 35
W-6100 Darmstadt(DE)**

(72) Erfinder: **Ort, Werner, Dipl.-Phys. Dr. rer. nat.
Mozartweg 42
W-6100 Darmstadt(DE)**

(74) Vertreter: **Brandt, Ernst-Ulrich
Hottinger Baldwin Messtechnik GmbH Patentabteilung Im Tiefen See 45 Postfach 42
35
W-6100 Darmstadt(DE)**

## Beschreibung

Die Erfindung betrifft Dehnungsmeßstreifen-Aufnehmer mit vier, an einer Meßfeder angebrachten und zu einer Meßbrücke verschalteten Dehnungsmeßstreifen und mindestens einem weiteren, in einem Eckpunkt der Meßbrücke eingefügten temperaturabhängigen Abgleichswiderstand, der sich in innigem Wärmekontakt mit dem Aufnehmerkörper befindet.

Es ist bekannt, an Dehnungsmeßstreifen-Aufnehmern den Temperaturgang des Nullsignals durch einen in die Dehnungsmeßstreifen-Meßbrücke eingefügten, entsprechend bemessenen, temperaturabhängigen Abgleichswiderstand so einzustellen, daß die temperaturbedingte Variation des Nullsignals innerhalb einer vorgegebenen Toleranz bleibt. Meist werden die beschriebenen Aufnehmer in Handelswaagen eingesetzt und unterliegen der Eichpflicht. Sie werden dann Wägezellen genannt. Aus Kostengründen werden sie nicht - wie sonst bei Aufnehmern üblich - hermetisch dicht gekapselt. Die Physikalisch Technische Bundesanstalt verlangt deshalb, daß solche Wägezellen unter extremen klimatischen Bedingungen einem 50 Tage dauernden Härtetest unterzogen werden. Um diesen Test bestehen zu können, werden alle vier Dehnungsmeßstreifen zusammen mit ihrer Verdrahtung einstückig aus Metallfolie geätzt und mit einer gegen Feuchte schützenden Metallfolie abgedeckt. Der Bereich, in dem die Verkabelung und der Abgleich erfolgt, wird vergossen. Dieser Verguß verändert den Temperaturgang des Nullsignals in unkontrollierbarer Weise bzw. ist eine exakte Messung erst im vergossenen Zustand möglich. Bei der Endkontrolle stellt sich daher häufig heraus, daß die angestrebte Toleranz des Temperaturgangs des Nullsignals nicht eingehalten wird. Da eine Nachbesserung jetzt nicht mehr möglich ist, entsteht bei der Produktion solcher Aufnehmer ein erheblicher Ausschuß. Dadurch werden aber die Herstellkosten unzuträglich erhöht. Hinzu kommt, daß durch die Anforderungen des Marktes die Toleranz immer weiter eingeengt wird.

Aus der DE-PS 29 16 390 ist es bekannt, zur Kompensation des Temperaturgangs des Nullsignals und zum Ausgleich von Fertigungstoleranzen in einem Eckpunkt der Meßbrücke einen in innigem Wärmekontakt mit dem Aufnehmerkörper stehenden temperaturabhängigen Abgleichswiderstand vorzusehen. Bei Anordnung dieses Abgleichswiderstandes in einem Verguß treten jedoch die vorstehend geschilderten Probleme auf, insbesondere ist es dann nicht mehr möglich, die erforderlich Nachbesserung vorzunehmen.

Der Erfindung liegt die Aufgabe zugrunde, die Streuung des Temperaturgangs des Nullsignals bei der Produktion derartiger Aufnehmer wesentlich einzuengen und noch nach erfolgter Fertigstellung des Dehnungsmeßstreifen-Aufnehmers den Temperaturgang des Nullsignals beeinflussen zu können. Diese Aufgabe wird bei einem Dehnungsmeßstreifen-Aufnehmer gemäß dem Oberbegriff des Patentanspruches 1 durch die im kennzeichnenden Teil dieses Anspruches angegebenen Maßnahmen gelöst. Der Temperaturgang des Nullsignals wird vor dem Vergießen erforderlichenfalls zunächst in der üblichen Weise eingestellt. Wenn die Endprüfung bei einem Aufnehmer dann eine Toleranzüberschreitung ergibt, kann diese mittels des weiteren Abgleichwiderstandes und mittels der zuschaltbaren Widerstände im Flachkabel korrigiert werden. Hierzu werden die zu dem weiteren Abgleichwiderstand führenden Leiterbahnen am anschlußseitigen Ende des Kabels zusammengeführt. Man braucht dann nur noch entsprechend auszuwählende Widerstände durch Auftrennen von Kurzschlußbahnen zuzuschalten und so die Wirkung des Abgleichwiderstandes anteilig auf die beiden Zweige der DMS-Meßbrücke aufzuteilen. Im Extremfall kann durch Auftrennen der einen oder anderen Leiterbahn (entspricht dem Zuschalten eines unendlich großen Widerstandes) die gesamte Wirkung des Abgleichwiderstandes nur einem Brückenzweig zugeordnet werden. Dies entspricht dem größtmöglichen Abgleich. Um alle Aufnehmer in die geforderte Toleranz bringen zu können, muß man also den Abgleichwiderstand so wählen, daß seine Wirkung der halben vorkommenden Streubreite des Temperaturgangs des Nullsignals entspricht, da der Mittelwert des Temperaturgangs des Nullsignals normalerweise um null liegen wird. Da andererseits der Abgleich nur in Stufen erfolgen kann, muß man die Zahl der auftrennbaren Widerstände so wählen, daß man immer in die Toleranzbreite treffen kann. Am besten geschieht dies dadurch, daß man die auftrennbaren Widerstände binär stuft. Dadurch kann man mit der kleinstmöglichen Anzahl von Widerständen den feinsten Abgleich erreichen.

Zufolge des sehr kleinen Temperaturkoeffizienten des Materials für diese Widerstände und die Leiterbahnen sind diese praktisch temperaturunempfindlich. Dadurch wird vermieden, daß unterschiedliche Temperaturen bzw. zeitlich unterschiedlich verlaufende Temperaturänderungen am Ort des Aufnehmerkörpers und an den Orten des Kabels und der in die Zuleitungen eingefügten Widerstände infolge der stark unterschiedlichen Wärmekapazität und Wärmeleitung von Kabel und Aufnehmerkörper zu einem instabilen Nullsignal und dadurch zu einer Verfälschung des Meßsignals führen.

Auch kann man für einen feineren Abgleich den weiteren Abgleichswiderstand in mehrere Teilwiderstände unterteilen, an denen jeweils zusätzli-

che Leiterbahnen des Anschlußkabels anzuschlie-ßen sind, so daß für den gewünschten Abgleich eine geeignete Auswahl dieser Teilwiderstände bedarfsweise in einen der Brückenzweige zugeschaltet werden kann.

Neben der erheblichen Verminderung des Ausschusses bei der Produktion derartiger Aufnehmer und der Erschließung höherwertiger Aufgaben ist ein weiterer Vorteil der Erfindung darin zu sehen, daß man in der Produktion die Aufnehmer nicht mehr nach Genauigkeitsklassen sortieren muß, was mit einem entsprechend größeren Aufwand in der Lagerhaltung und beim Versand verbunden wäre.

Anhand eines in den Zeichnungen schematisch dargestellten Ausführungsbeispiels wird die Erfindung erläutert. Es zeigen:

Fig.1 die Ansicht eines entsprechenden Dehnungsmeßstreifen-Aufnehmers,

Fig.2 das Schaltbild des Aufnehmers gemäß Fig.1

Fig.3 ein praktisches Ausführungsbeispiel eines bei einem Aufnehmer gemäß Fig. 1 zu verwendenden flexiblen Anschlußkabels mit je drei zuschaltbaren Widerständen in den Leiterbahnen 4 und 5.

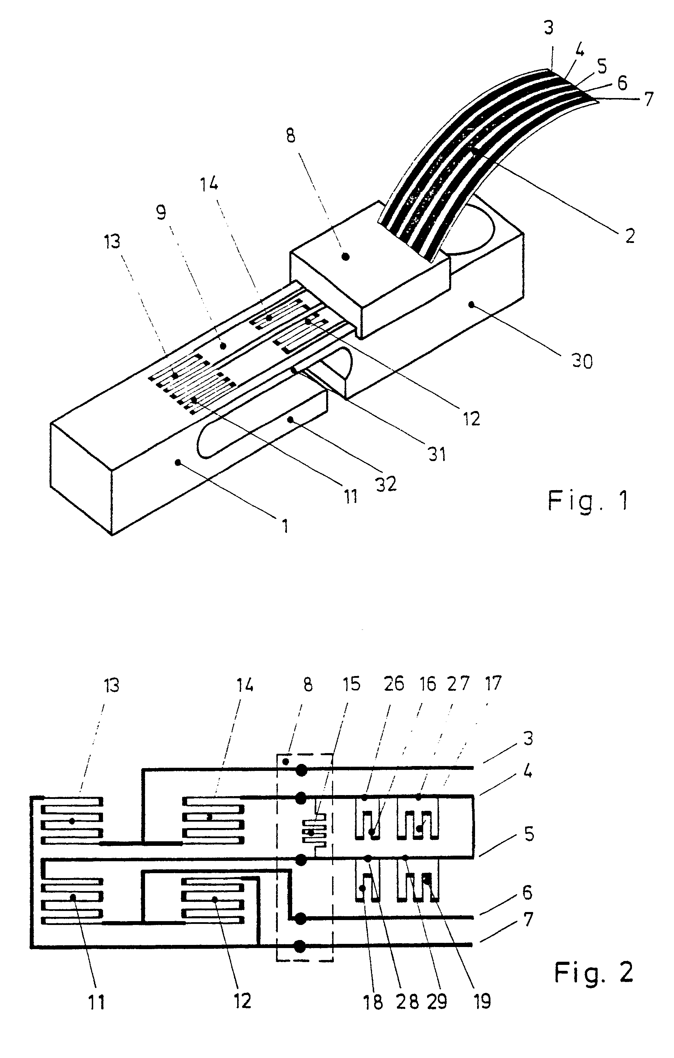

Das in Fig. 1 dargestellte Beispiel zeigt einen Dehnungsmeßstreifen-Aufnehmer, wie er vorzugsweise für Wägezwecke verwendet und dann Wägezelle genannt wird. Er besteht aus einem Aufnehmerkörper 1 mit einem befestigungsseitigen Ende 30, einem als Feder ausgebildeten Mittenteil 31 und einem Rückkragarm 32 für die Krafteinleitung. Auf dem Federbereich 31 ist eine Dehnungsmeßstreifen-Applikation 9 angebracht, die in einem auf dem Befestigungsende 30 angebrachten Verguß 8 mündet, in dessen Bereich diverse Abgleichselemente untergebracht sind. Aus dem Verguß 8 führt ein Flachbandkabel 2 heraus. Um am sonst fertiggestellten Aufnehmer zur Feinkorrektur einen Abgleich des Temperaturgangs des Nullsignals vornehmen zu können, ist gemäß Fig. 2 an einer Ecke der aus den Dehnungsmeßstreifen 11, 12, 13 und 14 bestehenden Vollbrücke zusätzlich ein kleiner, temperaturabhängiger Widerstand 15 vorgesehen, dessen Enden über die Leiterbahnen 4 und 5 des Anschlußkabels 2 aus dem Verguß 8 herausgeführt sind. Das Kabel 2 ist eine flexible Printplatte, deren Leiterbahnen 3, 4, 5, 6, 7 aus einer Metallfolie mit einem sehr kleinen Temperaturkoeffizienten des elektrischen Widerstandes bestehen und die mittels eines Fotoätzverfahrens hergestellt sind. Zu den Leiterbahnen 4 und 5 sind im gleichen Ätzverfahren hergestellte Widerstände 16, 17, 18 ,19 in Reihe geschaltet, die zunächst durch niederohmige Teile 26, 27, 28, 29 (Kurzschlußbahnen) der Leiterbahnen 4 bzw. 5 kurzgeschlossen sind. Werden die Leiterbahnen 4 und 5 am anschlußseitigen Ende des Kabels 2 zusammengefaßt, kann man durch wahlweises Zuschalten der Widerstände 16, 17, 18, 19 eine anteilige Wirkung des Abgleichswiderstandes 15 nach Bedarf dem einen und dem anderen Zweig der Dehnungsmeßstreifenbrücke zuordnen. Hierdurch wird ein Feinabgleich des Temperaturgangs des Nullsignals an dem im übrigen fertigen Dehnungsmeßstreifen-Aufnehmer ermöglicht.

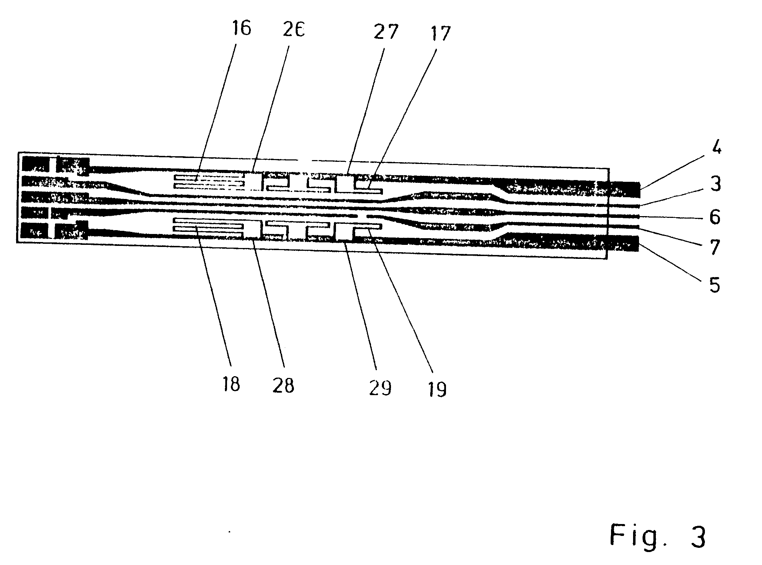

Der Anschaulichkeit halber ist in Fig. 3 eine in der Praxis verwendete Ausführungsform eines solchen flexiblen Anschlußkabels mit zuschaltbaren Widerständen in vergrößertem Maßstab dargestellt.

## Ansprüche

1. Dehnungsmeßstreifen-Aufnehmer mit vier, an einer Meßfeder angebrachten und zu einer Meßbrücke veschalteten Dehnungsmeßstreifen und mindestens einem weiteren, in einem Eckpunkt der Brücke eingefügten, temperaturabhängigen Abgleichswiderstand, der sich in innigem Wärmekontakt mit der Aufnehmerfeder befindet, dadurch gekennzeichnet, daß
   - jeder weitere Abgleichwiderstand (15) sich in einem Verguß (8) befindet und seine Enden mittels Leiterbahnen (4, 5) eines Anschlußkabels (2), zusammen mit den übrigen Brückeneckpunkten elektrisch aus dem Verguß herausgeführt sind,
   - das Anschlußkabel (2) ein flaches, flexibles Kabel ist, dessen Leiterbahnmaterial einen sehr kleinen Temperaturkoeffizienten des elektrischen Widerstandes besitzt und dessen Leiterbahnen (3, 4, 5, 6, 7) im Fotoätzverfahren hergestellt sind, und
   - daß in die mit den Enden jedes Abgleichwiderstandes (15) verbundenen Leiterbahnen (4, 5) kurzgeschlossene, elektrische Widerstände (16, 17, 18, 19) eingefügt sind, die ebenfalls einen sehr kleinen Temperaturkoeffizienten des elektrischen Widerstandes besitzen und aus demselben Material wie die Leiterbahnen bestehen und in demselben Fotoätzprozeß wie diese hergestellt sind und die durch Auftrennen der Kurzschlußbahnen (26, 27, 28, 29) zuschaltbar sind und
   - daß die mit dem Ende des Abgleichswiderstandes (15) verbundenen Leiterbahnen (4, 5) am anschlußseitigen Ende des Kabels elektrisch zusammengeführt sind.

2. Dehnungsmeßstreifen-Aufnehmer nach Anspruch 1, dadurch gekennzeichnet, daß der weitere Abgleichswiderstand (15) so gewählt ist, daß seine Wirkung der halben, bei der Produktion der Dehnungsmeßstreifen-Aufnehmer auftretenden Streubreite des Temperaturgangs des Nullsignals an einer größeren Zahl von Aufnehmern entspricht und daß die Widerstände (16, 17, 18, 19) in den Leiterbahnen (4, 5) nach Anzahl und Widerstandsstufung so bemessen sind, daß möglichst alle Aufnehmer durch bedarfsweises Auftrennen von Kurzschlußbahnen (26, 27, 28, 29) in die geforderte enge Toleranz des Temperaturgangs des Nullsignals gebracht werden können.

3. Dehnungsmeßstreifen-Aufnehmer nach einem der vorhergehenden Ansprüche, dadurch gekennzeichnet, daß die Widerstandswerte der in den Leiterbahnen (4, 5) eingefügten Widerstände (16, 17, 18, 19) binär gestuft sind.

4. Dehnungsmeßstreifen-Aufnehmer nach einem der vorhergehenden Ansprüche, dadurch gekennzeichnet, daß der weitere Abgleichswiderstand (15) aus mehreren Teilwiderständen besteht, an denen zusätzliche Leiter des Anschlußkabels (2) angeschlossen sind.

## Claims

1. Strain gauge sensor with four strain gauges attached to a measuring spring and wired to a measuring bridge and with at least one further temperature-dependent balancing resistor inserted into a corner of the bridge and located in intimate thermal contact with the sensor spring, characterised in that
   - each further balancing resistor (15) is located in a casting (8) and its ends are led electrically out of the casting, together with the remaining bridge corners, by means of strip conductors (4,5) of a connecting cable (2),
   - the connecting cable (2) is a flat, flexible cable whose strip conductor material possesses a very small temperature coefficient of electrical resistance and whose strip conductors (3,4,5,6,7) are manufactured by the photoetching method, and
   - that there are inserted into the strip conductors (4,5) connected to the ends of each balancing resistor (15) short-circuited, electrical resistors (16,17,18,19) which likewise possess a very small temperature coefficient of electrical resistance and consist of the same material as the strip conductors and are manufactured by the same photoetching method as the latter and can be connected up by opening of the short-circuit paths (26,27,28,29) and
   - that the strip conductors (4,5) connected to the end of the balancing resistor (15) are led together electrically to the connector end of the cable.

2. Strain gauge sensor according to claim 1, characterised in that the further balancing resistor (15) is chosen so that its effect corresponds to half the spread, occurring during the production of the strain gauge sensors, of the temperature variation of the zero signal for a large number of sensor, and that the resistor (16,17,18,19) in the strip conductors (4,5) are designed as regards quantity and resistance grading so that as many sensors as possible can be brought, by need-dictated opening of short-circuit paths (26,27,28,29), within the required narrow tolerance for the temperature variation of the zero signal.

3. strain gauge sensor according to any one of the preceding claim, characterised in that the resistance values of the resistor (16,17,18,19) inserted into the strip conductors (4,5) are graded binarily.

4. strain gauge sensor according to any one of the preceding claims, characterised in that the further balancing resistor (15) consists of several sub-resistors, to which additional conductors of the connecting cable (2) are connected.

## Revendications

1. Capteur à jauges extensométriques, comportant quatre jauges extensométriques montées sur un ressort de mesure et branchées en formant un pont de mesure et au moins une résistance supplémentaire d'équilibrage, insérée en un coin du pont, de valeur dépendant de la température, qui se trouve en contact thermique intime avec le ressort du capteur, caractérisé en ce que
   - cette résistance d'équilibrage supplémentaire (15) se trouve dans un enrobage (8) et ses extrémités sortent électriquement de l'enrobage, au moyen de pistes conductrices (4,5) d'un câble de raccordement (2), conjointement avec les autres points des coins du pont,
   - le câble de raccordement (2) est un câble plat, flexible, dont le matériau de piste conductrice présente un coefficient de température de résistance électrique très faible et dont les pistes conductrices (3,4,5,6,7) sont fabriquées selon le procédé de photogravure, et

- des résistances électriques (16,17,18,19) mises en court-circuit sont insérées dans les pistes conductrices (4,5) reliées aux extrémités de cette résistance d'équilibrage (15), présentent également des coefficients de température de résistance électrique très faible, sont composées dans le même matériau que les pistes conductrices et sont fabriquées suivant le même procédé de photogravures que les pistes et peuvent être mises en circuit par coupure des pistes de court-circuit (26,27,28,29), et

- les pistes conductrices (4,5) reliées à l'extrémité de la résistance d'équilibrage (15) sont groupées électriquement à l'extrémité, côté raccordement, du câble.

2. Capteur à jauges extensométriques selon la revendication 1, caractérisé en ce que la résistance supplémentaire d'équilibrage (15) est choisie de façon que son effet corresponde, sur un nombre important de capteurs, à la moitié de la largeur de dispersion, survenant lors de la production des capteurs à jauges extensométriques, de la fluctuation ou dérive, due à la température, du signal de zéro, et que les résistances (16,17,18,19) situées dans les pistes conductrices (4,5) sont dimensionnées, en nombre et en étagement des résistances, de façon qu'on puisse autant que possible régler tous les capteurs grâce à une coupure, réalisée en cas de besoin, des pistes de court-circuit (26,27,28,29) dans les limites de tolérance étroite exigées pour la dérive en fonction de la température du signal de zéro.

3. Capteur à jauges extensométriques selon l'une des revendications précédentes, caractérisé en ce que les valeurs des résistance (16,17,18,19) insérées dans les pistes conductrices (4,5) suivent un étagement binaire.

4. Capteur à jauges extensométriques selon l'une des revendications précédentes, caractérisé en ce que la résistance d'équilibrage supplémentaire (15) se compose de plusieurs résistances partielles, auxquelles sont raccordées des conducteurs supplémentaires du câble de raccordement (2).

Fig. 1

Fig. 2

Fig. 3